(19) Europäisches Patentamt / European Patent Office / Office européen des brevets

(11) **EP 3 810 464 B1**

(12) **EUROPÄISCHE PATENTSCHRIFT**

(45) Veröffentlichungstag und Bekanntmachung des Hinweises auf die Patenterteilung:
**31.07.2024 Patentblatt 2024/31**

(21) Anmeldenummer: **19734290.0**

(22) Anmeldetag: **14.06.2019**

(51) Internationale Patentklassifikation (IPC):
*B60T 8/172* *(2006.01)* *B60T 8/1755* *(2006.01)*
*B62D 6/00* *(2006.01)*

(52) Gemeinsame Patentklassifikation (CPC):
**B60T 8/172; B60T 8/17551; B60W 40/12;**
**B60W 50/0098;** B60T 2240/07; B60T 2250/03;
B60W 2050/0088; B60W 2520/14; B60W 2520/28

(86) Internationale Anmeldenummer:
**PCT/EP2019/065695**

(87) Internationale Veröffentlichungsnummer:
**WO 2019/243191 (26.12.2019 Gazette 2019/52)**

(54) **VERFAHREN ZUR ERMITTLUNG EINES KORRIGIERTEN RADRADIUS ANHAND DER GEMESSENEN GIERRATE**

METHOD FOR DETERMINING A CORRECTED WHEEL RADIUS ON THE BASIS OF THE MEASURED YAW RATE

PROCÉDÉ DE DÉTERMINATION D'UN RAYON DE ROUE CORRIGÉ SUR LA BASE DU TAUX DE LACET MESURÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.06.2018 DE 102018115043**

(43) Veröffentlichungstag der Anmeldung:
**28.04.2021 Patentblatt 2021/17**

(73) Patentinhaber:
• **thyssenkrupp Presta AG**
  **9492 Eschen (LI)**
• **thyssenkrupp AG**
  **45143 Essen (DE)**

(72) Erfinder: **LAPIS, Leonard**
**9466 Sennwald (CH)**

(74) Vertreter: **thyssenkrupp Intellectual Property GmbH**
**ThyssenKrupp Allee 1**
**45143 Essen (DE)**

(56) Entgegenhaltungen:
EP-A1- 2 287 057 DE-A1- 102012 208 298
DE-A1- 102016 010 750 DE-A1- 102016 223 902

**Beschreibung**

Die vorliegende Erfindung betrifft ein Verfahren zur Ermittlung eines Radradius mit den Merkmalen des Oberbegriffs des Anspruchs 1.

Der Durchmesser, Umfang und Radius eines Fahrzeugrads oder Reifens ist zur Bestimmung vieler Fahrzeuggrößen notwendig. Dazu gehören beispielsweise die Radgeschwindigkeit, die Fahrzeuggeschwindigkeit, die zurückgelegte Strecke, die aktuelle Fahrzeugposition oder die Fahrzeugausrichtung. Die zuvor aufgeführten Größen sind wiederum maßgebend für Fahrzeugsysteme, wie beispielsweise das Antiblockiersystem (ABS), die Antischlupfregelung (ASR) oder das elektronische Stabilitätsprogramm (ESP).

Der Radumfang eines Fahrzeugrades ist durch den Abrollumfang definiert, das heißt die Wegstrecke, welche je Umdrehung des Rads zurückgelegt wird. Die Radabrollumfänge eines jeden Fahrzeugrades sind nicht konstant und können sich beispielsweise durch folgende Gründe verändern: Luftdruckschwankungen, Fertigungstoleranzen der Räder, Temperaturveränderungen, Verschleiß oder Radwechsel.

DE 10 2016 010 750 A1 beschreibt ein Verfahren zur Schätzung absoluter Radrollradien und eines vertikalen Kompressionswertes. Dabei werden Giergeschwindigkeiten des Fahrzeugs, Raddrehzahlen eines ersten und zweiten Rades und wahlweise eine Seitenbeschleunigung des Fahrzeugs gemessen und als Basis der Schätzung verwendet.

Aus der Offenlegungsschrift EP 1 826 530 A1 ist ein Verfahren zur Bestimmung eines Radumfangs bekannt. Als nachteilig erweist sich diese Lösung dahingehend, dass für die Bestimmung des Radumfangs zunächst für eine gewisse Zeitdauer geradeaus gefahren werden muss und zusätzlich noch eine Kurvenfahrt erforderlich ist.

Es ist deshalb Aufgabe der vorliegenden Erfindung, ein verbessertes Verfahren zur Ermittlung eines Radius eines Kraftfahrzeugrades anzugeben.

Diese Aufgabe wird von einem Verfahren zur Ermittlung eines Radradius mit den Merkmalen des Anspruchs 1 gelöst. In den Unteransprüchen sind vorteilhafte Weiterbildungen der Erfindung genannt. Vorteilhafte Weiterbildungen ergeben sich aus den Unteransprüchen.

Demnach ist ein Verfahren zur Ermittlung eines Radradius eines Kraftfahrzeuges vorgesehen, das folgende Schritte aufweist:

- Berechnen einer Gierrate des Kraftfahrzeuges mittels einer Radgeschwindigkeit wenigstens eines Rades und einem vorgegebenen Radradius,

- Vergleichen von der berechneten Gierrate mit einer gemessenen Gierrate,

- Anpassen von der in der Berechnung der Gierrate eingeflossenen Radgeschwindigkeit des wenigstens einen Rades mittels eines Korrekturfaktors, so dass die berechnete Gierrate gleich der gemessenen Gierrate ist,

- Multiplikation des Korrekturfaktors und dem vorgegeben Radradius und/oder der in die Berechnung der Gierrate eingeflossenen Radgeschwindigkeit zur Ermittlung eines korrigierten Radradius und/oder einer korrigierten Radgeschwindigkeit.

Das Verfahren erlaubt auf einfache Art und Weise die Ist-Radradien durch Ermittlung eines jeweiligen Korrekturfaktors zu bestimmen.

Vorzugsweise wird die Bestimmung des Korrekturfaktors für alle vier Räder durchgeführt. Es ergibt sich somit für jedes Rad ein einzelner Korrekturfaktor.

In einer bevorzugten Ausführungsform sind nur die Vorderräder lenkbar. Für diesen Fall werden die Korrekturfaktoren mit folgender Formel berechnet:

$$k_{RR} = \frac{b \cdot \dot\psi - k_{FL} \cdot v_{FL} \cdot \cos\delta_{FL}}{-v_{RR}} \qquad \text{mit} \qquad k_{FL} = \frac{\dot\psi \cdot l}{v_{FL} \cdot \sin\delta_{FL}} \quad ,$$

$$k_{RL} = \frac{b \cdot \dot\psi + k_{FR} \cdot v_{FR} \cdot \cos\delta_{FR}}{v_{RL}} \qquad \text{mit} \qquad k_{FR} = \frac{\dot\psi \cdot l}{v_{FR} \cdot \sin\delta_{FR}} \quad ,$$

wobei

$v_{FL}$  Radgeschwindigkeit vorne links
$v_{FR}$  Radgeschwindigkeit vorne rechts

| | |
|---|---|
| $v_{RL}$ | Radgeschwindigkeit hinten links |
| $v_{RR}$ | Radgeschwindigkeit hinten rechts |
| $\delta_{FL}$ | Radlenkwinkel vorne links |
| $\delta_{FR}$ | Radlenkwinkel vorne rechts |
| $l$ | Achsabstand |
| $b$ | Spurbreite |

In einer weiteren bevorzugten Ausführungsform werden die jeweiligen Korrekturfaktoren für jedes einzelne Rad einer Hinterradlenkung bestimmt. Für diesen Fall werden die Korrekturfaktoren mit folgender Formel berechnet:

$$k_{RR} = \frac{-b \cdot \dot{\psi} + \cos \delta_{FL} \cdot \frac{\dot{\psi}(l \cdot \cos \delta_{RR} + b \cdot \sin \delta_{RR})}{\sin(\delta_{RR} - \delta_{FL})}}{v_{RR} \cdot \cos \delta_{RR}}$$

$$\text{mit} \qquad k_{FL} = \frac{\dot{\psi} \cdot (l \cdot \cos \delta_{RR} + b \cdot \sin \delta_{RR})}{v_{FL} \cdot \sin(\delta_{RR} - \delta_{FL})} \qquad ,$$

$$k_{RL} = \frac{b \cdot \dot{\psi} + \cos \delta_{FR} \cdot \frac{\dot{\psi}(l \cdot \cos \delta_{RL} + b \cdot \sin \delta_{RL})}{\sin(\delta_{FR} - \delta_{RL})}}{v_{RL} \cdot \cos \delta_{RL}}$$

mit

$$k_{FR} = \frac{\dot{\psi} \cdot (l \cdot \cos \delta_{RL} + b \cdot \sin \delta_{RL})}{v_{FR} \cdot \sin(\delta_{FR} - \delta_{RL})} \qquad ,$$

wobei

| | |
|---|---|
| $\delta_{RL}$ | Radlenkwinkel hinten links |
| $\delta_{RR}$ | Radlenkwinkel hinten rechts. |

Vorzugsweise fließen folgende gemessene Werte in die Berechnung der Korrekturfaktoren ein: die Gierrate und die Radlenkwinkel der lenkbaren Räder.

Es ist vorteilhaft, wenn die Korrekturfaktoren nur bestimmt werden, wenn die gemessene Gierrate > 0,05°/s ist und/oder die gemessene Gierbeschleunigung < 0,01 °/s² ist. Zusätzlich ist es bevorzugt, dass die Radgeschwindigkeit > 0.2m/s ist und/oder die Radbeschleunigung < 0,1m/s² ist.

Weiterhin kann eine Vorrichtung vorgesehen werden, die dazu ausgestaltet ist, das zuvor beschriebene Verfahren durchzuführen.

Zudem kann ein Steer-by-Wire-Lenksystem für ein Kraftfahrzeug mit dieser Vorrichtung vorgesehen werden.

Es ist weiterhin denkbar und möglich, dass das Verfahren für eine elektromechanische Kraftfahrzeuglenkung eingesetzt werden kann. Es ist weiterhin denkbar und möglich, das Verfahren für eine elektromechanische Bremse, einen elektrischen Antrieb oder bei einer Hinterradlenkung zu implementieren.

Eine bevorzugte Ausführungsform der Erfindung wird nachfolgend anhand der Zeichnungen näher erläutert. Gleichartige oder gleichwirkende Bauteile werden in den Figuren mit denselben Bezugszeichen bezeichnet. Es zeigen:

Fig. 1:     eine schematische Darstellung eines Steer-by-Wire-Lenksystems,

Fig. 2:     eine schematische Draufsicht auf ein Kraftfahrzeug, sowie

Fig. 3:     ein Blockdiagramm einer Berechnung einer korrigierten Radgeschwindigkeit.

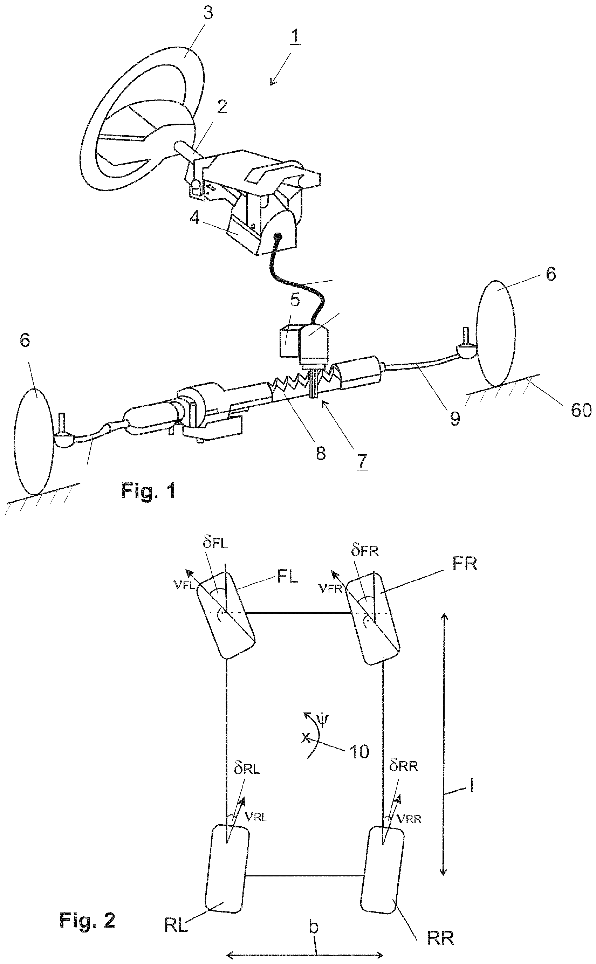

In der Fig. 1 ist ein Steer-by-Wire-Lenksystem 1 gezeigt. An einer Lenkwelle 2 ist ein nicht dargestellter Drehwinkelsensor angebracht, welcher das durch Drehen eines Lenkeingabemittels 3, welches im Beispiel als Lenkrad ausgebildet ist, aufgebrachten Fahrerlenkwinkel erfasst. Es kann aber zusätzlich auch ein Lenkmoment erfasst werden. Des Weiteren ist an der Lenkwelle 2 ein Feedback-Aktuator 4 angebracht, welcher dazu dient, die Rückwirkungen von der Fahrbahn 60 auf das Lenkrad 3 zu simulieren und somit dem Fahrer eine Rückmeldung über das Lenk- und Fahrverhalten des Fahrzeugs zu geben. Ein elektrischer Lenksteller 5 steuert die Stellung der gelenkten Räder 6. Der Lenksteller 5 wirkt über ein Lenkstangen-Lenkgetriebe 7, wie beispielsweise einem Zahnstangen-Lenkgetriebe, wobei die Zahnstange 8 über nicht dargestellte Kugelgelenke mit Spurstangen 9 und anderen Bauteilen mittelbar auf die gelenkten Räder 6 wirkt.

In der Fig. 2 ist das Kraftfahrzeug in Draufsicht dargestellt. An einer Vorderachse sind bezogen auf eine Fahrtrichtung zwei lenkbare Vorderräder FL,FR vorgesehen, die sich um Radlenkwinkel $\delta_{FL}$, $\delta_{FR}$ verschwenken lassen. Eine Hinterachse weist zwei weitere nicht lenkbare Räder RL, RR auf, die sich um Radlenkwinkel $\delta_{RL}$, $\delta_{RR}$ verschwenken lassen. Jedem Rad FL, FR, RL, RR ist eine Radgeschwindigkeit $v_{FL}$, $v_{FR}$, $v_{RL}$, $v_{RR}$ zugeordnet. Die Achsen weisen einen Achsabstand l auf. Das Fahrzeug hat eine Spurbreite b. Das Fahrzeug bewegt sich um die Hochachse 10 mit einer Winkelgeschwindigkeit $\dot{\psi}$, der sogenannten Gierrate. Die Hochachse 10 ist dabei eine vertikale Achse durch den Schwerpunkt des Fahrzeuges, um welche sich das Fahrzeug bei Lenkbewegungen auf einer Fahrt dreht. Die Gierrate $\dot{\psi}$, die Radgeschwindigkeiten $v_{FL}$, $v_{FR}$, $v_{RL}$, $v_{RR}$ und die Radlenkwinkel $\delta_{FL}$, $\delta_{FR}$, $\delta_{RL}$, $\delta_{RR}$ werden gemessen und daraus die tatsächlichen, korrigierten Radien der Fahrzeugräder bestimmt.

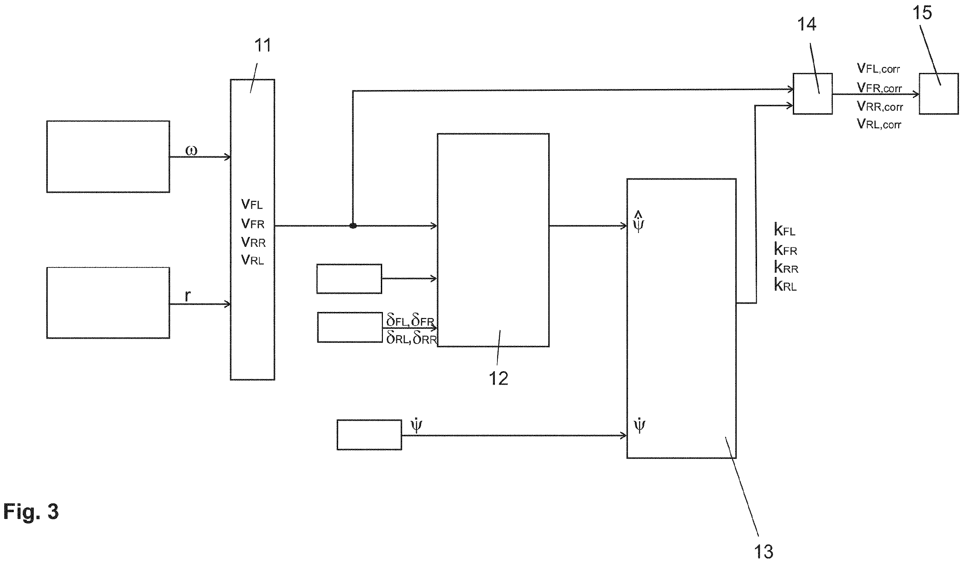

Fig. 3 zeigt die Bestimmung von Korrekturfaktoren $k_{FL}$, $k_{FR}$, $k_{RL}$, $k_{RR}$ der Radien der Kraftfahrzeugräder FL, FR, RL, RR.

Bei der Bestimmung der Korrekturfaktoren $k_{FL}$, $k_{FR}$, $k_{RL}$, $k_{RR}$ wird der Gültigkeitsbereich bevorzugt durch folgende Bedingungen festgelegt:

- Radbeschleunigung $a_{FL}$, $a_{FR}$, $a_{RL}$, $a_{RR}$ < 0,1m/s$^2$

- Radgeschwindigkeit $v_{FL}$, $v_{FR}$, $v_{RL}$, $v_{RR}$ > 0.2m/s

- Gierrate $\dot{\psi}$ > 0,05°/s

- Gierbeschleunigung $\ddot{\psi}$ < 0,01 °/s$^2$ .

Das Fahrzeug muss sich mit relativ hoher Gierrate und mit einer relativ niedrigen Geschwindigkeit bewegen, damit der Schwimmwinkel gering bleibt. Die Variablen in den Gleichungen haben folgende Bedeutung:

| | |
|---|---|
| $v_{FL}$ | Radgeschwindigkeit vorne links |
| $v_{FR}$ | Radgeschwindigkeit vorne rechts |
| $v_{RL}$ | Radgeschwindigkeit hinten links |
| $v_{RR}$ | Radgeschwindigkeit hinten rechts |
| $\delta_{FL}$ | Radlenkwinkel vorne links |
| $\delta_{FR}$ | Radlenkwinkel vorne rechts |
| $\delta_{RL}$ | Radlenkwinkel hinten links |
| $\delta_{RR}$ | Radlenkwinkel hinten rechts |
| $l$ | Achsabstand |
| $b$ | Spurbreite |
| $k_{FL}$ | Korrekturfaktor vorne links |
| $k_{FR}$ | Korrekturfaktor vorne rechts |
| $k_{RL}$ | Korrekturfaktor hinten links |
| $k_{RR}$ | Korrekturfaktor hinten rechts |
| $\dot{\psi}$ | gemessene Gierrate |
| $\hat{\dot{\psi}}$ | berechnete Gierrate |
| $\omega$ | Raddrehzahl |
| $r_{FL}$ | Radradius vorne links |
| $r_{FR}$ | Radradius vorne rechts |
| $r_{RL}$ | Radradius hinten links |
| $r_{RR}$ | Radradius hinten rechts |

Die Gierrate des Kraftfahrzeuges um die Hochachse kann aus jeder Radgeschwindigkeit mit definiertem Radradius unter Berücksichtigung der Starrkörperdynamik berechnet werden.

Die Raddrehzahl $\omega$ und ein fester Radradiuswert $r$ werden zur Berechnung der Radgeschwindigkeiten in einem ersten Schritt 11 verwendet.

Die Geschwindigkeiten der lenkbaren Vorderräder ergeben sich aus

$$\underline{v}_{FL} = \underline{v}_{RR} + \underline{\omega} \times \underline{r}_{RR \atop FL} \qquad \underline{v}_{FR} = \underline{v}_{RL} + \underline{\omega} \times \underline{r}_{RL \atop FR} \qquad .$$

Die Gierrate des Kraftfahrzeuges lässt sich in einem zweiten Schritt 12 durch Auflösen der Vektorgleichungen mit festem Radradiuswert auf verschiedene Weise berechnen:

$$\begin{bmatrix} v_{FL} \cdot \cos \delta_{FL} \\ v_{FL} \cdot \sin \delta_{FL} \end{bmatrix} = \begin{bmatrix} v_{RR} \\ 0 \end{bmatrix} + \begin{vmatrix} i & j & k \\ 0 & 0 & \hat{\dot{\psi}} \\ l & -b & 0 \end{vmatrix} = \begin{bmatrix} v_{RR} + \hat{\dot{\psi}} \cdot b \\ \hat{\dot{\psi}} \cdot l \end{bmatrix} ,$$

$$\begin{bmatrix} v_{FR} \cdot \cos \delta_{FR} \\ v_{FR} \cdot \sin \delta_{FR} \end{bmatrix} = \begin{bmatrix} v_{RL} \\ 0 \end{bmatrix} + \begin{vmatrix} i & j & k \\ 0 & 0 & \hat{\dot{\psi}} \\ l & b & 0 \end{vmatrix} = \begin{bmatrix} v_{RL} - \hat{\dot{\psi}} \cdot b \\ \hat{\dot{\psi}} \cdot l \end{bmatrix} ,$$

$$\hat{\dot{\psi}} = \frac{v_{FL} \cdot \sin \delta_{FL}}{l} ,$$

$$\hat{\dot{\psi}} = \frac{v_{FL} \cdot \cos \delta_{FL} - v_{RR}}{b} ,$$

$$\hat{\dot{\psi}} = \frac{v_{FR} \cdot \sin \delta_{FR}}{l} ,$$

$$\hat{\dot{\psi}} = \frac{-v_{FR} \cdot \cos \delta_{FR} + v_{RL}}{b} .$$

Neben den berechneten Radgeschwindigkeiten werden dazu die gemessenen Radlenkwinkel der beiden Vorderräder $\delta_{FL}$, $\delta_{FR}$ verwendet.

In einem nächsten Schritt 13 werden die berechneten Gierratenwerte $\hat{\dot{\psi}}$ mit den gemessenen Gierratenwerten verglichen. Die berechneten Radgeschwindigkeiten werden durch Multiplikation mit einem Korrekturfaktor in einem weiteren Schritt 14 so korrigiert, dass die aus den Radgeschwindigkeiten berechneten Gierraten gleich der gemessenen Gierrate sind. Da die Raddrehzahl bekannt ist, korrigieren die Korrekturfaktoren die Radradien.

Die Korrekturfaktoren für die vier Räder ergeben sich somit aus:

$$k_{RR} = \frac{b \cdot \dot{\psi} - k_{FL} \cdot v_{FL} \cdot \cos \delta_{FL}}{-v_{RR}} \qquad \text{mit} \qquad k_{FL} = \frac{\dot{\psi} \cdot l}{v_{FL} \cdot \sin \delta_{FL}} ,$$

$$k_{RL} = \frac{b \cdot \dot{\psi} - k_{FR} \cdot v_{FR} \cdot \cos \delta_{FR}}{v_{RL}} \qquad \text{mit} \qquad k_{FR} = \frac{\dot{\psi} \cdot l}{v_{FR} \cdot \sin \delta_{FR}} .$$

Bei einer Hinterradlenkung werden die jeweiligen Korrekturfaktoren für jedes einzelne Rad mit folgender Formel berechnet:

$$k_{RR} = \frac{-b \cdot \dot{\psi} + \cos \delta_{FL} \cdot \dfrac{\dot{\psi}(l \cdot \cos \delta_{RR} + b \cdot \sin \delta_{RR})}{\sin(\delta_{RR} - \delta_{FL})}}{v_{RR} \cdot \cos \delta_{RR}}$$

mit

$$k_{FL} = \frac{\dot{\psi} \cdot (l \cdot \cos \delta_{RR} + b \cdot \sin \delta_{RR})}{v_{FL} \cdot \sin(\delta_{RR} - \delta_{FL})} \qquad ,$$

$$k_{RL} = \frac{b \cdot \dot{\psi} + \cos \delta_{FR} \cdot \dfrac{\dot{\psi}(l \cdot \cos \delta_{RL} + b \cdot \sin \delta_{RL})}{\sin(\delta_{FR} - \delta_{RL})}}{v_{RL} \cdot \cos \delta_{RL}}$$

mit

$$k_{FR} = \frac{\dot{\psi} \cdot (l \cdot \cos \delta_{RL} + b \cdot \sin \delta_{RL})}{v_{FR} \cdot \sin(\delta_{FR} - \delta_{RL})} \qquad ,$$

wobei

$\delta_{RL}$    Radlenkwinkel hinten links

$\delta_{RR}$    Radlenkwinkel hinten rechts.

Die korrigierten Radgeschwindigkeiten $v_{FL,corr}$, $v_{FR,corr}$, $v_{RL,corr}$, $v_{RR,corr}$ fließen anschließend in die fahrdynamischen Regelsysteme 15 ein. Die korrigierten Radradien können ebenfalls durch Multiplikation mit dem entsprechenden Korrekturfaktor berechnet werden und zur Bestimmung weiterer wichtiger Fahrzeuggrößen verwendet werden, die dann wiederrum in Fahrassistenzsysteme einfließen können.

## Patentansprüche

1. Verfahren zur Ermittlung eines korrigierten Radradius bzw. einer korrigierten Radgeschwindigkeit eines Kraftfahrzeuges, das die folgenden Schritte aufweist:

  • Berechnen einer Gierrate des Kraftfahrzeuges ( $\hat{\dot{\psi}}$ ) mittels einer Radgeschwindigkeit $(v_{FL}, v_{FR}, v_{RL}, v_{RR})$ wenigstens eines Rades (FL, FR, RL, RR), die mittels eines vorgegebenen Radradius $(r)$ bestimmt wird,

  • Vergleichen von der berechneten Gierrate ( $\hat{\dot{\psi}}$ ) mit einer gemessenen Gierrate ($\dot{\psi}$), **dadurch gekennzeichnet, dass** folgende Schritte vorgesehen sind:

    • Anpassen von der in die Berechnung der Gierrate eingeflossenen Radgeschwindigkeit ($v_{FL}$, $v_{FR}$, $v_{RL}$, $v_{RR}$) des wenigstens einen Rades (FL, FR, RL, RR) mittels jeweils eines dem jeweiligen Rad (FL, FR, RL, RR) zugeordneten Korrekturfaktors ($k_{FL}$, $k_{FR}$, $k_{RL}$, $kRR$), so dass die berechnete Gierrate ( $\hat{\dot{\psi}}$ ) gleich der gemessenen Gierrate ($\dot{\psi}$) ist, wobei in eine Berechnung der jeweiligen Korrekturfaktoren ($k_{FL}$, $k_{FR}$, $k_{RL}$, $k_{RR}$ ) folgende gemessenen Werte einfließen: die gemessene Gierrate ($\dot{\psi}$) und Radlenkwinkel der lenkbaren Räder ($\delta_{FL}$, $\delta_{FR}$, $\delta_{RL}$, $\delta_{RR}$),
    • Multiplikation des jeweiligen Korrekturfaktors ($k_{FL}$, $k_{FR}$, $k_{RL}$, $k_{RR}$ ) mit dem vorgegeben Radradius $(r)$ und/oder der in die Berechnung der Gierrate eingeflossenen Radgeschwindigkeit ($v_{FL}$, $v_{FR}$, $v_{RL}$, $v_{RR}$) zur Ermittlung eines korrigierten Radradius und/oder einer korrigierten Radgeschwindigkeit ($v_{FL,corr}$, $v_{FR,corr}$, $v_{RL,corr}$, $v_{RR,corr}$ ).

2. Verfahren nach Anspruch 1, **dadurch gekennzeichnet, dass** die Berechnung des Korrekturfaktors ($k_{FL}$, $k_{FR}$, $k_{RL}$,

$k_{RR}$) für alle vier Räder (FL, FR, RL, RR) durchgeführt wird.

3. Verfahren nach Anspruch 1 oder 2, **dadurch gekennzeichnet, dass** das Verfahren für ein Kraftfahrzeug durchgeführt wird, dessen Vorderräder (FL, FR) lenkbar sind.

4. Verfahren nach Anspruch 3, **dadurch gekennzeichnet, dass** die jeweiligen Korrekturfaktoren ($k_{FL}$, $k_{FR}$, $k_{RL}$, $k_{RR}$) mit folgender Formel berechnet werden:

$$k_{RR} = \frac{b \cdot \dot{\psi} - k_{FL} \cdot v_{FL} \cdot \cos \delta_{FL}}{-v_{RR}} \quad \text{mit} \quad k_{FL} = \frac{\dot{\psi} \cdot l}{v_{FL} \cdot \sin \delta_{FL}} \quad ,$$

$$k_{RL} = \frac{b \cdot \dot{\psi} + k_{FR} \cdot v_{FR} \cdot \cos \delta_{FR}}{v_{RL}} \quad \text{mit} \quad k_{FR} = \frac{\dot{\psi} \cdot l}{v_{FR} \cdot \sin \delta_{FR}} \quad ,$$

wobei

$v_{FL}$ Radgeschwindigkeit vorne links
$v_{FR}$ Radgeschwindigkeit vorne rechts
$v_{RL}$ Radgeschwindigkeit hinten links
$v_{RR}$ Radgeschwindigkeit hinten rechts
$\delta_{FL}$ Radlenkwinkel vorne links
$\delta_{FR}$ Radlenkwinkel vorne rechts
$l$ Achsabstand
$b$ Spurbreite

ist.

5. Verfahren nach Anspruch 3, **dadurch gekennzeichnet, dass** das Verfahren für ein Kraftfahrzeug mit einer Hinterradlenkung durchgeführt wird und die jeweiligen Korrekturfaktoren ($k_{FL}$, $k_{FR}$, $k_{RL}$, $k_{RR}$) mit folgender Formel berechnet werden:

$$k_{RR} = \frac{-b \cdot \dot{\psi} + \cos \delta_{FL} \cdot \dfrac{\dot{\psi}(l \cdot \cos \delta_{RR} + b \cdot \sin \delta_{RR})}{\sin(\delta_{RR} - \delta_{FL})}}{v_{RR} \cdot \cos \delta_{RR}}$$

mit

$$k_{FL} = \frac{\dot{\psi} \cdot (l \cdot \cos \delta_{RR} + b \cdot \sin \delta_{RR})}{v_{FL} \cdot \sin(\delta_{RR} - \delta_{FL})} \quad ,$$

$$k_{RL} = \frac{b \cdot \dot{\psi} + \cos \delta_{FR} \cdot \dfrac{\dot{\psi}(l \cdot \cos \delta_{RL} + b \cdot \sin \delta_{RL})}{\sin(\delta_{FR} - \delta_{RL})}}{v_{RL} \cdot \cos \delta_{RL}}$$

mit

$$k_{FR} = \frac{\dot{\psi} \cdot (l \cdot \cos \delta_{RL} + b \cdot \sin \delta_{RL})}{v_{FR} \cdot \sin(\delta_{FR} - \delta_{RL})} \quad ,$$

wobei

$\delta_{RL}$ Radlenkwinkel hinten links

$\delta_{RR}$ Radlenkwinkel hinten rechts.

6. Verfahren nach einem der vorhergehenden Ansprüche, **dadurch gekennzeichnet, dass** die jeweiligen Korrekturfaktoren $(k_{FL}, k_{FR}, k_{RL}, k_{RR})$ nur bestimmt werden, wenn die gemessene Gierrate $(\dot{\psi})$> 0,05°/s ist.

7. Verfahren nach einem der vorhergehenden Ansprüche, **dadurch gekennzeichnet, dass** die jeweiligen Korrekturfaktoren $(k_{FL}, k_{FR}, k_{RL}, k_{RR})$ nur bestimmt werden, wenn die gemessene Gierbeschleunigung $(\ddot{\psi})$< 0,01 °/s² ist.

8. Verfahren nach einem der vorhergehenden Ansprüche, **dadurch gekennzeichnet, dass** die jeweiligen Korrekturfaktoren $(k_{FL}, k_{FR}, k_{RL}, k_{RR})$ nur bestimmt werden, wenn die Radgeschwindigkeit $(v_{FL}, v_{FR}, v_{RL}, v_{RR})$ > 0.2m/s ist.

9. Verfahren nach einem der vorhergehenden Ansprüche, **dadurch gekennzeichnet, dass** die jeweiligen Korrekturfaktoren $(k_{FL}, k_{FR}, k_{RL}, k_{RR})$ nur bestimmt werden, wenn die Radbeschleunigung $(a_{FL}, a_{FR}, a_{RL}, a_{RR})$< 0,1m/s² ist.

**Claims**

1. A method for determining a corrected wheel radius and/or a corrected wheel speed, respectively, of a motor vehicle comprising the following steps:

    • calculating a yaw rate of the motor vehicle ( $\hat{\dot{\psi}}$ ) by means of a wheel speed ($v_{FL}$, $v_{FR}$, $v_{RL}$, $v_{RR}$) of at least one wheel (FL, FR, RL, RR) which is determined by means of a predefined wheel radius (r),

    • comparing the calculated yaw rate ( $\hat{\dot{\psi}}$ ) with a measured yaw rate ($\dot{\psi}$),

    **characterized in that** the following steps are provided:

    • adapting the wheel speed ($v_{FL}$, $v_{FR}$, $v_{RL}$, $v_{RR}$), input in the calculation of the yaw rate, of the at least one wheel (FL, FR, RL, RR) by means of a respective correction factor ($k_{RR}$, $k_{FR}$, $k_{RL}$, $k_{RR}$) assigned to the respective wheel (FL, FR, RL, RR) so that the calculated yaw rate ( $\hat{\dot{\psi}}$ ) is equal to the measured yaw rate ($\dot{\psi}$), wherein the following measured values are input in the calculation of the respective correction factors ( $k_{RR}$, $k_{FR}$, $k_{RL}$, $k_{RR}$): the measured yaw rate ($\dot{\psi}$) and the wheel steering angles of the steerable wheels ($\delta_{FL}$, $\delta_{FR}$, $\delta_{RL}$, $\delta_{RR}$),
    • multiplying the respective correction factor ($k_{RR}$, $k_{FR}$, $k_{RL}$, $k_{RR}$) with the predefined wheel radius (r) and/or the wheel speed ($v_{FL}$, $v_{FR}$, $v_{RL}$, $v_{RR}$), input in the calculation of the yaw rate, for the determination of a corrected wheel radius and/or of a corrected wheel speed ($v_{FL,corr}$, $v_{FR,cor}$, $v_{FL,corr}$, $v_{RR,corr}$).

2. The method as claimed in claim 1, **characterized in that** the calculation of the correction factor ($k_{RR}$, $k_{FR}$, $k_{RL}$, $k_{RR}$) is carried out for all four wheels (FL, FR, RL, RR).

3. The method as claimed in claim 1 or 2, **characterized in that** the method is carried out for a motor vehicle having steerable front wheels (FL, FR).

4. The method as claimed in claim 3, **characterized in that** the respective correction factors ($k_{RR}$, $k_{FR}$, $k_{RL}$, $k_{RR}$) are calculated according to the following formula:

$$k_{RR} = \frac{b \cdot \dot{\psi} - k_{FL} \cdot v_{FL} \cdot \cos\delta_{FL}}{-v_{RR}} \text{ with } k_{FL} = \frac{\dot{\psi} \cdot l}{v_{FL} \cdot \sin\delta_{FL}},$$

$$k_{RL} = \frac{b \cdot \dot{\psi} + k_{FR} \cdot v_{FR} \cdot \cos\delta_{FR}}{v_{RL}} \text{ with } k_{FR} = \frac{\dot{\psi} \cdot l}{v_{FR} \cdot \sin\delta_{FR}},$$

where

$v_{FL}$ Wheel speed front left
$v_{FR}$ Wheel speed front right
$v_{RL}$ Wheel speed rear left
$v_{RR}$ Wheel speed rear right
$\delta_{FL}$ Wheel steering angle front left
$\delta_{FR}$ Wheel steering angle front right
$l$ Wheelbase
$b$ Track width

5. The method as claimed in claim 3, **characterized in that** the method is carried out for a motor vehicle with rear-wheel steering, and wherein the respective correction factors ($k_{RR}$, $k_{FR}$, $k_{RL}$, $k_{RR}$) are calculated according to the following formula:

$$k_{RR} = \frac{-b \cdot \dot{\psi} + \cos \delta_{FL} \cdot \dfrac{\dot{\psi}(l \cdot \cos \delta_{RR} + b \cdot \sin \delta_{RR})}{\sin(\delta_{RR} - \delta_{FL})}}{v_{RR} \cdot \cos \delta_{RR}}$$

with

$$k_{FL} = \frac{\dot{\psi} \cdot (l \cdot \cos \delta_{RR} + b \cdot \sin \delta_{RR})}{v_{FL} \cdot \sin(\delta_{RR} - \delta_{FL})},$$

$$k_{RL} = \frac{b \cdot \dot{\psi} + \cos \delta_{FR} \cdot \dfrac{\dot{\psi}(l \cdot \cos \delta_{RL} + b \cdot \sin \delta_{RL})}{\sin(\delta_{FR} - \delta_{RL})}}{v_{RL} \cdot \cos \delta_{RL}}$$

with

$$k_{FR} = \frac{\dot{\psi} \cdot (l \cdot \cos \delta_{RL} + b \cdot \sin \delta_{RL})}{v_{FR} \cdot \sin(\delta_{FR} - \delta_{RL})},$$

where

$\delta_{RL}$ Wheel steering angle rear left
$\delta_{RR}$ Wheel steering angle rear right

6. The method as claimed in one of the preceding claims, **characterized in that** the respective correction factors ($k_{RR}$, $k_{FR}$, $k_{RL}$, $k_{RR}$) are determined only if the measured yaw rate ($\dot{\psi}$) is > 0.05 °/s.

7. The method as claimed in one of the preceding claims, **characterized in that** the respective correction factors ($k_{RR}$, $k_{FR}$, $k_{RL}$, $k_{RR}$) are determined only if the measured yaw acceleration ($\ddot{\psi}$) is < 0.01 °/s$^2$.

8. The method as claimed in one of the preceding claims, **characterized in that** the respective correction factors ($k_{RR}$, $k_{FR}$, $k_{RL}$, $k_{RR}$) are determined only if the wheel speed ($v_{FL}$, $v_{FR}$, $v_{RL}$, $v_{RR}$) is > 0.2 m/s.

9. The method as claimed in one of the preceding claims, **characterized in that** the respective correction factors ($k_{RR}$, $k_{FR}$, $k_{RL}$, $k_{RR}$) are determined only if the wheel acceleration ($a_{FL}$, $a_{FR}$, $a_{RL}$, $a_{RR}$) is < 0.1 m/s$^2$.

**Revendications**

1. Procédé de détermination d'un rayon de roue corrigé et/ou d'une vitesse de roue corrigée, respectivement, d'un véhicule à moteur, comprenant les étapes suivantes :

• calculer une vitesse de lacet du véhicule à moteur ( $\hat{\dot{\psi}}$ ) au moyen d'une vitesse de roue ( $v_{FL}$, $v_{FR}$, $v_{RL}$, $v_{RR}$ ) d'au moins une roue (FL, FR, RL, RR) qui est déterminée au moyen d'un rayon de roue prédéfini (r ),

• comparer la vitesse de lacet calculée ( $\hat{\dot{\psi}}$ ) à une vitesse de lacet mesurée ( $\dot{\psi}$ ),

**caractérisé en ce que** les étapes suivantes sont prévues :

• adapter la vitesse de rotation des roues ( $v_{FL}$, $v_{FR}$, $v_{RL}$, $v_{RR}$ ), saisie dans le calcul de la vitesse de lacet, d'au moins une roue (FL, FR, RL, RR) au moyen d'un facteur de correction respectif ( $k_{RR}$, $k_{FR}$, $k_{RL}$, $k_{RR}$ ) attribué à la roue respective (FL, FR, RL, RR) de sorte que la vitsse de lacet calculée ( $\hat{\dot{\psi}}$ ) soit égale à la vitesse de lacet mesurée ( $\dot{\psi}$ ), les valeurs mesurées suivantes étant saisies dans le calcul des facteurs de correction respectifs ( $k_{RR}$, $k_{FR}$, $k_{RL}$, $k_{RR}$ ) : la vitesse de lacet mesurée ( $\dot{\psi}$ ) et les angles de direction des roues directrices ( $\delta_{FL}$, $\delta_{FR}$, $\delta_{RL}$, $\delta_{RR}$ ),

• multiplier le facteur de correction respectif ( $k_{RR}$, $k_{FR}$, $k_{RL}$, $k_{RR}$ ) avec le rayon de roue prédéfini (r ) et/ou la vitesse de roue ( $v_{FL}$, $v_{FR}$, $v_{RL}$, $v_{RR}$ ), entrés dans le calcul de la vitesse de lacet, pour la détermination d'un rayon de roue corrigé et/ou d'une vitesse de roue corrigée ( $v_{FL,corr}$, $v_{FR,cor}$, $v_{RL,corr}$, $v_{RR,corr}$ ).

2. Procédé selon la revendication 1, **caractérisé par en ce que** le calcul du facteur de correction ( $k_{RR}$, $k_{FR}$, $k_{RL}$, $k_{RR}$ ) est effectué pour les quatre roues (FL, FR, RL, RR).

3. Procédé selon la revendication 1 ou 2, **caractérisée en ce que** la procédé est mise en oeuvre pour un véhicule à moteur ayant des roues avant directrices (FL, FR).

4. Procédé selon la revendication 3, **caractérisée en ce que** les facteurs de correction respectifs ( $k_{RR}$, $k_{FR}$, $k_{RL}$, $k_{RR}$ ) sont calculés selon la formule suivante :

$$k_{RR} = \frac{b \cdot \dot{\psi} - k_{FL} \cdot v_{FL} \cdot \cos\delta_{FL}}{-v_{RR}} \quad \text{avec} \quad k_{FL} = \frac{\dot{\psi} \cdot l}{v_{FL} \cdot \sin\delta_{FL}} \; ,$$

$$k_{RL} = \frac{b \cdot \dot{\psi} + k_{FR} \cdot v_{FR} \cdot \cos\delta_{FR}}{v_{RL}} \quad \text{avec} \quad k_{FR} = \frac{\dot{\psi} \cdot l}{v_{FR} \cdot \sin\delta_{FR}} \; ,$$

où

$v_{FL}$ vitesse de roue avant gauche
$v_{FR}$ vitesse de roue avant droite
$v_{RL}$ vitesse de roue arrière gauche
$v_{RR}$ vitesse de roue arrière droite
$\delta_{FL}$ angle de direction de roue avant gauche
$\delta_{FR}$ angle de direction de roue avant droite
$l$ distance entre essieux
$b$ largeur de voie.

5. Procédé selon la revendication 3, **caractérisée en ce que** la procédé est appliquée à un véhicule automobile à roues arrière directrices, et que les facteurs de correction respectifs ( $k_{RR}$, $k_{FR}$, $k_{RL}$, $k_{RR}$ ) sont calculés selon la formule suivante :

$$k_{RR} = \frac{-b \cdot \dot{\psi} + \cos\delta_{FL} \cdot \dfrac{\dot{\psi}(l \cdot \cos\delta_{RR} + b \cdot \sin\delta_{RR})}{\sin(\delta_{RR} - \delta_{FL})}}{v_{RR} \cdot \cos\delta_{RR}}$$

avec

$$k_{FL} = \frac{\dot{\psi} \cdot \left( l \cdot \cos \delta_{RR} + b \cdot \sin \delta_{RR} \right)}{v_{FL} \cdot \sin \left( \delta_{RR} - \delta_{FL} \right)} \quad ,$$

$$k_{RL} = \frac{b \cdot \dot{\psi} + \cos \delta_{FR} \cdot \dfrac{\dot{\psi}(l \cdot \cos \delta_{RL} + b \cdot \sin \delta_{RL})}{\sin(\delta_{FR} - \delta_{RL})}}{v_{RL} \cdot \cos \delta_{RL}}$$

avec

$$k_{FR} = \frac{\dot{\psi} \cdot \left( l \cdot \cos \delta_{RL} + b \cdot \sin \delta_{RL} \right)}{v_{FR} \cdot \sin \left( \delta_{FR} - \delta_{RL} \right)} \quad ,$$

où

$\delta_{RL}$ angle de direction de roue arrière gauche
$\delta_{RR}$ angle de direction de roue arrière droite.

6. Procédé selon l'une des revendications précédentes, **caractérisée en ce que** les facteurs de correction respectifs ($k_{RR}$, $k_{FR}$, $k_{RL}$, $k_{RR}$) ne sont déterminés que si la vitesse de lacet mesurée ($\dot{\psi}$) est > 0,05 °/s.

7. Procédé selon l'une des revendications précédentes, **caractérisé en ce que** les facteurs de correction respectifs ($k_{RR}$, $k_{FR}$, $k_{RL}$, $k_{RR}$) ne sont déterminés que si l'accélération de lacet mesurée ($\ddot{\psi}$) est < 0,01 °/s².

8. Procédé selon l'une des revendications précédentes, **caractérisée en ce que** les facteurs de correction respectifs ($k_{RR}$, $k_{FR}$, $k_{RL}$, $k_{RR}$) ne sont déterminés que si la vitesse de la roue ($v_{FL}$, $v_{FR}$, $v_{RL}$, $v_{RR}$) est > 0,2 m/s.

9. Procédé selon l'une des revendications précédentes, **caractérisé en ce que** les facteurs de correction respectifs ($k_{RR}$, $k_{FR}$, $k_{RL}$, $k_{RR}$) ne sont déterminés que si l'accélération de la roue ($a_{FL}$, $a_{FR}$, $a_{RL}$, $a_{RR}$) est < 0,1 m/s² .

**Fig. 1**

**Fig. 2**

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016010750 A1
- EP 1826530 A1